# EUROPEAN PATENT APPLICATION

(11) **EP 1 656 990 A1**
(43) Date of publication of application: **17.05.2006**
(21) Application number: 04026418.6
(22) Date of filing: 08.11.2004
(51) Int. Cl.: B01J 19/12, B01J 8/10

(54) **Rotary reactor using solar energy**

(71) Applicant: PAUL SCHERRER INSTITUT, 5232 Villigen PSI (CH)
(72) Inventor: Müller, Reto, 8005 Zürich (CH); Palumbo, Robert, Prof. Dr., 5200 Brugg (CH); Häberling, Peter, 5313 Klingnau (CH)
(74) Representative: Fischer, Michael

(57) **Abstract**

According to the present invention, a reactor for direct utilization of external radiation heat for thermal or thermo-chemical material processes is disclosed, comprising:
a) a containment can having a longitudinal axis,
b) an external driving mechanism for controllable rotating the containment can,
c) a cavity having a substantially cylindrical shape, said cavity being at least partially lined with an insulation layer and being disposed in said containment can,
d) said cavity having at least one gas inlet and at least one gas outlet and an aperture for allowing to insert the external radiation heat into the cavity,
e) a feeder mechanism being moveable along the longitudinal axis into and out of the cavity for supplying the material subject to the thermal or thermo-chemical material process;
f) said at least one gas outlet is formed as a ring channel tube having an inner and an outer surface; whereby the feeder mechanism is at least partially hosted within a tube cavity defined by said inner surface; and
g) cooling means being associated with said inner and/or outer surface.

These features lead to a reactor that delivers the heat directly into the cavity for the thermal or thermochemical processing of the feed material that is homogeneously heated by controlling the rotation speed of the containment can position. By defining a heat gradient along the annular shaped gas outlet by the cooling means allow to collect the desired reaction products outside of the cavity.

## Description

The invention relates to a reactor for direct utilization of external radiation heat for thermal or thermo-chemical material processes.

In many chemical processes, solids need to be heated to high temperatures for the chemical reaction to proceed. If the reaction temperature is exceeding the operating temperature of conventional metals like steel; the apparatus has to be made from alternative high-temperature resistant materials. Examples of such energy-intensive high-temperature processes with considerable CO₂ emissions are the processing of lime and cement as well as the reduction of metal oxides.

Different types of solar reactors are known, even solar rotary kilns. However, they usually utilize direct sunlight as heat source. The solar energy is concentrated in a solar concentrator and focused through an aperture into the reaction chamber that is often tightly closed by a transparent window. Such applications locally yield high energy densities, Therefore, it is the aim of the present invention to provide a reactor of the mentioned type that can be heated by an external radiation heat source, in particular concentrated solar radiation, which is particularly well suited for the efficient utilization of direct radiation heat transfer for thermal or thermo-chemical processing of different materials at high temperatures.,

This aim is achieve according to the present invention by a reactor for direct utilization of external radiation heat for thermal or thermo-chemical material processes, comprising:
a) a containment can having a longitudinal axis,
b) an external driving mechanism for controllable rotating the containment can,
c) a cavity having a substantially cylindrical shape, said cavity being at least partially lined with an insulation layer and being disposed in said containment can,
d) said cavity having at least one gas inlet and at least one gas outlet and an aperture for allowing to insert the external radiation heat into the cavity,
e) a feeder mechanism being moveable along the longitudinal axis into and out of the cavity for supplying the material subject to the thermal or thermo-chemical material process;
f) said at least one gas outlet is formed as a ring channel tube having an inner and an outer surface; whereby the feeder mechanism is at least partially hosted within a tube cavity defined by said inner surface; and
g) cooling means being associated with said inner and/or outer surface.

These features lead to a reactor that delivers the heat directly into the cavity for the thermal or thermochemical processing of the feed material that is homogeneously heated by controlling the rotation speed of the containment can position. In contrast to conventional processes, a homogeneous and clean thermal or thermochemical processing of the feed materials is ensured. By defining a heat gradient along the annular shaped gas outlet by the cooling means allow to collect the desired reaction products outside of the cavity.

The mechanical feeder system is crucial for the supply and the distribution of the reactant particles throughout the cavity.

In order to provide a broad range of flexibility said feeder mechanism can be formed as a screw conveyor. This mechanism enables the operator of the reactor to match current solar conditions and the chemical reactivity of the reactants so that the reactor can operate under optimal conditions. The feeding can thus be one ranging from continuous to batch operation.

In order to prevent a relevant heat transfer into said feeder mechanism, a thermally insulated head section can be provided which shields the water cooled screw conveyor from the hot cavity when there is no feeding. This arrangement helps reduce heat loss from the cavity to the water cooled feeder.
For the controlled gathering of gaseous reaction products the inner and/or outer surface of the ring channel gas outlet can be cooled by the cooling means to generate a negative temperature gradient as seen in the flow direction of a reaction gas flowing from the cavity through the gas outlet. To support this gathering at distinct locations or within a distinct range of the gas outlet ring channel, cooling inert gas can be introduced into the ring channel, such as an inert gas like Ar and/or nitrogen. This measure allows the operator of the reactor to design the temperature gradient so that at least one reaction product from the chemical or thermochemical material process is condensing and/or solidifying on the cooled inner and/or outer surface within the ring channel.

A suitable measure for the removal of the condensed or solidified reaction product is to abrade it from the inner and/or outer surface by scraper means that can optionally and in a preferred embodiment be disposed on the inner and/or outer surface being activated by the movement of the feeder mechanism. The feeder can also be retracted toward the back of the cavity. When this occurs the the inner and/or outer surface of the feeder is swept by a scraper and the particles that formed on the feeder's cold surface are dragged out of the reactor where the gas also exits the reactor.

To increase the lifetime of the insulation layer defining the cavity, the insulation layer may comprise a protective barrier towards the cavity in order to prevent the reaction material from damaging the thermal insulation around the cavity. The barrier is primarily for preventing the gaseous products from being lost in the insulation. In a preferred embodiment, the protective barrier is a thin layer selected from the group consisting of silicon carbide, or hafnium oxide and possibly thorium oxide or other suitable materials.

In order to maintain an efficient chemical or thermo-chemical process an inert gas can be introduced at the gas inlet into the cavity, said gas being preheated to prevent reaction products from condensing in the hot cavity.

The quality of the feed material and the quality and/or quantity demands for the reaction product may differ from case to case what requires a certain flexibility with respect to the process parameters. Therefore, the containment can be rotated at a rotational speed in the range of 20 to 200 rpm, preferably in the range of 80 to 150 rpm.
In order to simplify the constructive measure of the reactor said containment may preferably rotate along its longitudinal axis. It should be mentioned that the containment can may alternatively rotate along an arbitrary axis.

For the homogeneity of the process and the flow of the feed material a reaction product originating from the feed material is continuously removed through the gas outlet. Therefore, the ring channel is shaped as a collector for collecting the reaction product even when the containment can is rotating.

By collecting the removed process gas and preheating the feed material with the collected process gas the energy balance of the process can be improved.

The lifetime of the reactor and the homogeneity of the temperature distribution both are significantly a function of the material properties of the used materials. made from a high-temperature resistant and thermally nonconductive ceramic material.

The external radiation entering the cavity assembly through the aperture may have an average energy flux in the range of 150-500 Watts/cm², when concentrated solar radiation is used. This power density has to be transferred into the cavity with a certain focussing but even with a certain homogeneous distribution. Therefore, a heat shield is provided to protect the edges of said aperture from said concentrated external radiation heat. The heat shield can be made from a heat resistant material or can be made from a fluid cooled metal, preferably aluminium or copper. Additionally, the heat shield can be suitably ring-shaped and comprises said aperture of said cavity. To diminish the leakage of heat from the cavity, said cavity may comprise a gas-cooled transparent window for said incident external radiation heat. For the purpose of increasing the solar gain, said aperture may comprise a secondary concentrator.

The reactor is generally suited for all thermal or thermochemical material processes which allows to use as the feed material any type of organic, inorganic, metallic, or ceramic solids, as well as mixtures of them, which are then subject to said thermal or said thermochemical material processing. Especially, fine-grained materials, such as zinc oxide, are preferred to generate a reaction product, such as zinc. Therefore, the reactor according to this invention is particularly suited for the clean processing of a variety of fine-grained materials at temperatures exceeding 1500 K. Utilizing this invention, some processing operations, which are currently carried out in direct-fired rotary kilns, for example that of lime production, may be more economical due to energy savings and other benefits of the reactor design of this invention.

Further advantageous features result from the dependent claims, the following description, and the drawings.

For one preferred embodiment of a reactor according to the present invention, the principle of the invention is described and illustrated in the appended drawings.
- Figure 1: is a schematic cross-sectional perspective view of an embodiment of the reactor; and

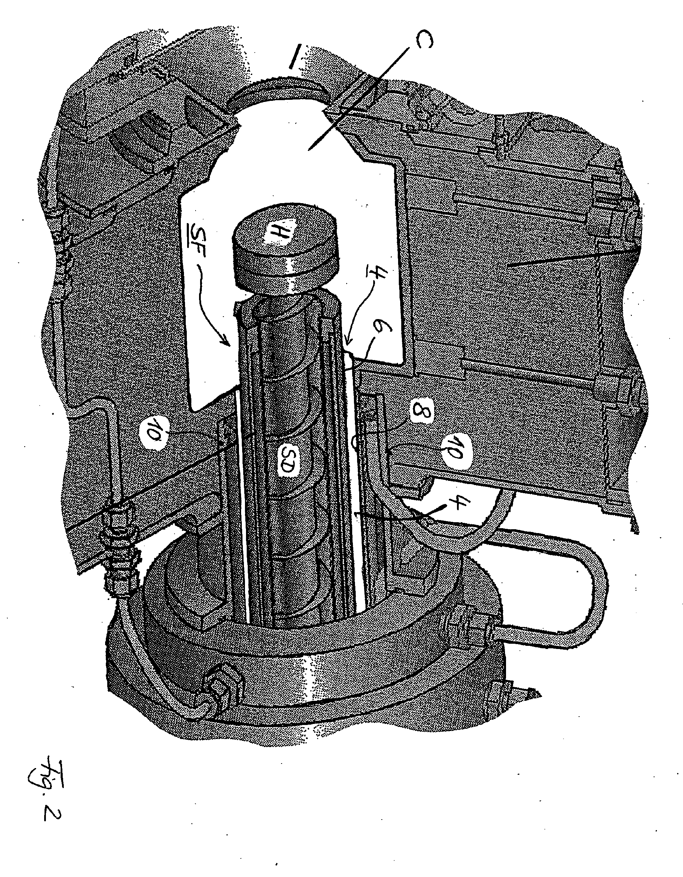

- Figure 2: is a schematic cross-sectional perspective view of an enlarged region of the reactor according to Figure 1.

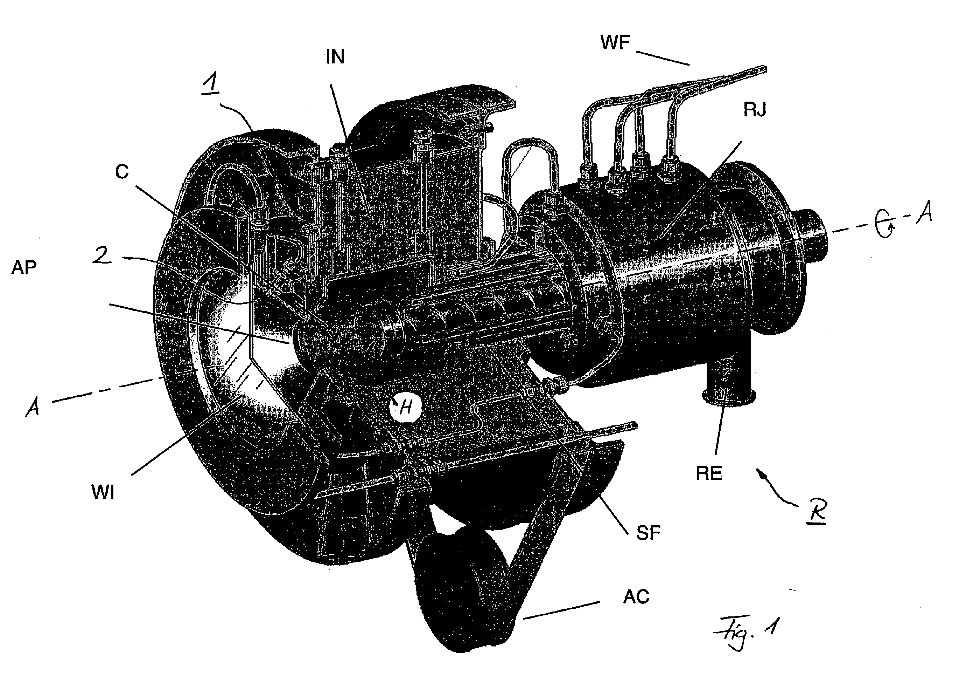

With reference to Fig. 1, the reactor R according to the present invention comprises a containment can 1 that can be rotated around its longitudinal axis A-A by means of an external driving mechanism AC. The rotation speed has a significant impact on the residence time of the feed material in the reactor R, in detail in the material flow path of the reactor R which is described below. Within the containment can 1, a high-temperature resistant thermal insulation layer IN is tightly mounted. This insulation layer IN designs a cavity C into which external radiation can be introduced via an aperture AP.

The feed material, in this specific embodiment zinc oxide as fine-grained solid material, is fed through a screw feeder SF 10 into the cavity C. The screw feeder SF has a head portion H, which is formed as a water cooled copper head with a zirconia heat insulation. This insulated head portion H prevents the heat from the cavity C from entering into the inner volume of screw feeder SF which hosts the screw device SD. The zinc oxide particle are fed into the cavity C in a semi-continuous manner and are distributed in a thin layer evenly along the wall of the cavity C due to the centripetal acceleration of the cavity C. The particles are thus heated directly by solar radiation that enters the cavity and, of course, the particles are heated indirectly by the hot wall of the cavity C. The chemical reaction, here the thermal or if desired the carbo-thermal decomposition of ZnO, is thus taking place on a large surface area of particles. Due to the large exposed surface area of the reactants and due to the very small temperature gradient within the cavity C, for which SiC or Hafnium is an excellent thermal conductor, high decomposition rates are achieved. The zinc remains in its gaseous state within the cavity C and is dragged out of the cavity C with the inert gas being preheated introduced into the cavity C via gas inlets 2. The dragged out gas mixture leaves the cavity C at an annular gas outlet 4 that is formed as a ring channel having an inner surface 6 and an outer surface 8. The inner surface 6 is thereby defining an inner ring cavity in which the screw feeder SF is disposed.

The screw feeder SF can evenly distribute the zinc oxide particles throughout the cavity C. During feeding, the screw feeder SF extends into the hot cavity C and retracts, distributing the particles along the wall of the cavity C due to the centripetal acceleration of the cavity C caused by the driving mechanism AC. By controlling the operation of the screw feeder SF the operator is able to match the current solar conditions and the chemical reactivity of the reactants so that the reactor R can operate under optimal conditions. This control comes through the fact that the operator can change at any time the feed rate and the amount of reactants that are fed during a given feed. The feeding condition is thus one ranging from continuous to batch operation.

The screw feeder SF is an integrated part of the quench system. The products exits the cavity C through the ring channel 4 that extends parallel to the longitudinal axis A-A of the reactor R. The external water cooled surface (supplied by water ducts WF within a rotary joint RJ) of the screw feeder SF which is equal to the inner surface 6 of the ring channel 4 is one quench surface and the internal wall of a surrounding water cooled cylinder 10 which was defined as the outer surface 8 of the ring channel 4 is another quenching surface. The products are quenched on these surfaces 6 and 8 and are additionally quenched due to the large temperature gradient caused on the product by introduction of cold inert gas, like nitrogen and/or an inert gas like Ar. Some of the zinc will fall onto the inner surface 6 (the surface of the screw feeder SF). When the screw feeder SF is retracted further to the back of the reactor R, the zinc particles are scrubbed from this surface and forwarded to an opening RE in the reactor R where can exit the reactor R together with the remaining components of Zn in the initial gas stream.
Of course, the reactor R according to the present invention can be used in all application where the reaction products are in gaseous form and will at least partially fall off in the ring channel 4 where significant quenching take place due to the tremendeous temperature gradient caused by the cooled surfaces 6 and 8.

## Claims

**1.** Reactor (R) for direct utilization of external radiation heat for thermal or thermo-chemical material processes, comprising:
a) a containment can (1) having a longitudinal axis (A-A),
b) an external driving mechanism (AC) for controllable rotating the containment can (1),
c) a cavity (C) having a substantially cylindrical shape, said cavity (C) being at least partially lined with an insulation layer (IN) and being disposed in said containment can (1),
d) said cavity (C) having at least one gas inlet (2) and at least one gas outlet (4) and an aperture (AP, WI) for allowing to insert the external radiation heat into the cavity (C),
e) a feeder mechanism (SF) being moveable along the longitudinal axis (A-A) into and out of the cavity (C) for supplying the material subject to the thermal or thermo-chemical material process;
f) said at least one gas outlet (4) is formed as a ring channel tube having an inner and an outer surface (6 and 8 resp.), whereby the feeder mechanism (SF) is at least partially hosted within a tube cavity defined by said inner surface (6); and
g) cooling means (10, WF) being associated with said inner and/or outer surface (6, 8).

**2.** Reactor (R) according to claim 1,
**characterized in that**
said feeder mechanism (SF) is formed as a screw conveyor (SD).

**3.** Reactor (R) according to claim 2,
**characterized in that**
said feeder mechanism (SF) comprises a thermally insulated head section (H).

**4.** Reactor (R) according to any one of the preceding claims,
**characterized in that**,
the inner and/or outer surface (6, 8) of the ring channel shaped gas outlet (4) are cooled by the cooling means (10, WF) to generate a negative temperature gradient as seen in the flow direction of a reaction gas flowing from the cavity (C) through the gas outlet (4).

**5.** Reactor (R) according to any one of the preceding claims,
**characterized in that**,
cooling inert gas is introduced into the ring channel (4), such as an inert gas like Ar or nitrogen.

**6.** Reactor (R) according to claim 4 or 5,
**characterized in that**
at least one reaction product from the chemical or thermochemical material process is condensing and/or solidifying on the cooled inner and/or outer surface (6, 8).

**7.** Reactor (R) according to any of the preceding claims 4 to 6, **characterized in that**
the condensed or solidified reaction product is abraded from the inner and/or outer surface by scraper means.

**8.** Reactor (R) according to claim 7,
**characterized in that**
the scraper means are disposed on the inner and/or outer surface (6, 8) being activated by the movement of the feeder mechanism (SF).

**8.** Reactor (R) according to any of the preceding claims,
**characterized in that**
the insulation layer (IN) comprises a protective barrier towards the cavity (C) in order to prevent the reaction material from being lost in the insulation and also to prevent it from damaging the thermal insulation surrounding the cavity (C).

**9.** Reactor (R) according to claim 8,
**characterized in that**
the protective barrier is a thin layer selected from the group consisting of either Silicon Carbide, hafnium oxide, thorium oxide or any other suitable material.

**10.** Reactor (R) according to any of the preceding claims,
**characterized in that**
at the gas inlet (2) an inert and/or a reactive gas is introduced into the cavity (C) being preheated to prevent reaction products from forming in the cavity (C).

**11.** Reactor (R) according to any one of the preceding claims,
**characterized in that**
the containment can (1) is rotating with a rotational speed in the range of 20 to 200 rpm when the feeder mechanism (SF) is moved into the cavity (C) for supplying the reaction material.

**12.** Reactor (R) according to any one of the preceding claims,
**characterized in that**
the insulating layer (IN) defining the cavity (C) is made from a high-temperature resistant and thermally nonconductive ceramic material, examples include Zirconia or Alumina.

**13.** Reactor (R) according to any one of the preceding claims,
**characterized in that**
said aperture (AP) comprises a gas-cooled transparent window (WI) for said incident external radiation heat.

**14.** Reactor (R) according to any of the preceding claims,
**characterized in that**
the material supplied by the feeder mechanism (SF) is of any type of organic, inorganic, metallic, or ceramic solids, as well as mixtures thereof, which are subject to said thermal or said thermo-chemical material processing.

**15.** Reactor (R) according to claim 14,
**characterized in that**
said material supplied by the feeder mechanism (SF) is zinc oxide and the reaction product is gaseous metallic zinc.
